# EUROPÄISCHE PATENTSCHRIFT

(11) **EP 1 865 784 B1**
(45) Veröffentlichungstag und Bekanntmachung des Hinweises auf die Patenterteilung: **13.04.2016**
(21) Anmeldenummer: 06742509.0
(22) Anmeldetag: 04.02.2006
(51) Int. Cl.: A22C 7/00, A22C 25/18

(54) **VERFAHREN ZUM HERSTELLEN EINZELNER PORTIONEN**
METHOD FOR PRODUCING INDIVIDUAL PORTIONS
PROCÉDÉ DE PRODUCTION DE PORTIONS INDIVIDUELLES

(30) Priorität: 07.04.2005 DE 102005016159
(43) Veröffentlichungstag der Anmeldung: 19.12.2007
(73) Patentinhaber: Nienstedt GmbH, 45721 Haltern am See (DE)
(72) Erfinder: GRONEBERG-NIENSTEDT, Petra, 40237 Düsseldorf (DE)
(74) Vertreter: Bungartz, Klaus Peter
(86) Internationale Anmeldenummer: PCT/EP2006/000987
(87) Internationale Veröffentlichungsnummer: WO 2006/105821

(56) Entgegenhaltungen:
- EP-A- 1 319 343
- EP-A- 1 470 754
- DE-A1- 2 235 517
- GB-A- 413 265
- GB-A- 2 280 869
- US-A- 3 644 125
- US-A- 4 474 823

## Beschreibung

Die Erfindung betrifft ein Verfahren zum Herstellen einzelner Fleischportionen mit jeweils bestimmter Form, Größe und insbesondere Masse nach dem Oberbegriff des Anspruchs 1.

Aus der EP-A-1 319 343 ist es bekannt, ein einzelnes gefrorenes Fleischstück so weit zu beschneiden, bis es ein gewünschtes Gewicht und eine gewünschte Vorform besitzt, um es dann im gefrorenen Zustand in einer Form zur Endform zu pressen. Dieses Verfahren führt durch das Beschneiden zu Reststücken, die anderweitig verwertet werden. Ferner ist es aus der EP-A-1 470 754 bekannt, ein Fleischstück größerer Masse als die des Endproduktes zwischen ein Ober- und Unterwerkzeug einer Presse zu legen, die beiden Werkzeuge stets auf denselben Zwischenabstand zu fahren und danach die gewünschten Fleischportionen aus der entstandenen Schicht auszustanzen. Auch hier fallen Reststücke an.

Ein weiteres Verfahren zum Formen von Fleischstücken zeigt die GB 413 265 A. Hier werden prismenförmige Stücke geformt, die nachfolgend in dreieckige Stücke zerschnitten werden. Dies ergibt aber immer gleiche Grundformen und beim Schneiden muss eine exakte Gewichtskontrolle durchgeführt werden, was oft schwierig ist.

Die GB 2 280 869 A zeigt ein Verfahren zum Pressen von Fleischteilen, bei dem in einer Ausführung diese gleichzeitig in kleinere Teile gestanzt werden. Dies ermöglicht es zwar, diese Fleischteile in kleinere Teile mit einheitlicher Form zu stanzen, hat aber den Nachteil, dass Stanzen und Pressen in einem Arbeitsschritt erfolgen, so dass es sein kann, dass dann in der Form eine Teilform sehr stark gefüllt ist, während durch die Stanzwände die Fleischanteile nicht seitlich auswandern können, so dass die anderen Bereiche nicht mehr gefüllt werden können, bevor der Stanzvorgang einsetzt.

Aufgabe der Erfindung ist es daher, ein Verfahren der eingangs genannten Art so zu verbessern, dass bei geringem technischen Aufwand und geringer Beanspruchung der Fleischstücke Fleischportionen entstehen, die zu vorgegebener Form und Größe führen.

Diese Aufgabe wird erfindungsgemäß durch ein Verfahren nach Anspruch 1 gelöst.

Durch dieses Verfahren werden Fleischportionen in vorbestimmter Masse und Form in ökonomischer Arbeitsweise geschaffen, ohne den Anfall von Reststücken und/oder Abfall. Das Fleisch bzw. die Fasern werden nur gering beansprucht und bei einfachen technischen Mitteln kommt es zu hohen Arbeitstaktzahlen. Besonders vorteilhaft ist hierbei, dass der Rand der Formmulde den außen liegenden Randabschnitten der Fleischportionen entspricht, so dass es nicht zu einem Abschneiden von über die Formmulde hinausreichenden Fleischbereichen kommt.

Erfindungsgemäß wird vorgeschlagen, dass die Fleischstücke in der Pressform durch einen Stempel zum Fleischteil geformt werden. Hierbei kann die Pressfläche des Stempels eine von einer Ebene abweichende Form zum Verformen der Oberseite des Fleischteils aufweisen.

Besonders vorteilhaft ist es, dass das Fleischteil durch ein Stanzwerkzeug in die Fleischportionen getrennt wird. Auch können während des Stanzens die Fleischportionen verformt werden.

Eine vorbestimmte Form der Unterseite der Fleischportion wird erreicht, wenn der Boden der Mulde eine von einer Ebene abweichende Form aufweist. Erfindungsgemäß kann das Stanzen des Fleischteils in Fleischportionen in der Pressform oder in einer Stanzmulde außerhalb der Pressform erfolgt.

Insbesondere ist es möglich, dass bei dem erfindungsgemäßen Verfahren das oder die Fleischstücke teilweise von Haut bedeckt sind. Von Vorteil ist es, wenn die Fleischstücke beim Einlegen in die Form eine Temperatur von -5°C bis -20°C aufweisen.

Erfindungsgemäß wird vorgeschlagen, dass das Fleisch von Geflügel, Rind, Schwein, Schaf oder Fisch stammt. Auch können die Fleischstücke vor dem Pressen und/oder Beschneiden in Tumblern und/oder durch Einlegen in Soßen oder Marinaden oder Gewürzen oder durch Injizieren vorbehandelt werden.

Vorteilhafte Ausführungsbeispiele des erfindungsgemäßen Verfahrens werden im Folgenden näher beschrieben.

Ein oder mehrere gefrorene Fleischstücke unterschiedlicher Größe, Form und Gewicht werden in die Mulde einer Pressform gelegt, die eine definierte Grundfläche hat. Die Grundfläche ergibt sich aus Form, Größe und Gewicht der späteren gewünschten Fleischportionen. Die Grundfläche kann eben sein oder auch Wölbungen besitzen, entsprechend den gewünschten Formen der späteren Fleischportionen.

Die Formmulde besitzt einen äußeren Rand, der nach oben vorsteht und in den ein entsprechend geformter Stempel von oben hineingedrückt wird, um das oder die in der Mulde einliegenden Fleischstücke so weit zu pressen, dass sie die gesamte Mulde ausfüllen und damit auch den gesamten Boden der Mulde bedecken. Sowohl der vorstehende äußere Rand der Mulde als auch die exakt vorbestimmte bzw. abgemessene Menge des oder der Fleischstücke sorgen dafür, dass durch das Pressen in der Mulde ein zusammenhängendes Fleischteil aus dem oder den Fleischstücken geschaffen wird, das eine exakt vorbestimmte Form, Größe und Masse besitzt. Es wird somit durch das vorherige exakte Abwiegen des oder der Fleischstücke erreicht, dass das in der Form durch Pressen erzeugte Fleischteil stets dieselbe Größe, Form und dasselbe Gewicht aufweist. Auch die Dicke dieses Fleischteils ist damit stets gleich der gewünschten Dicke.

Der Stempel kann hierbei an seiner Unterseite eben sein oder eine bestimmte definierte Topographie besitzen, entsprechend der gewünschten Form der Oberseite des Fleischteils.

Das auf diese Weise hergestellte tiefgefrorene Fleischteil wird dann nach Entfernen des Stempels in der Form oder in einer Stanzmulde außerhalb der Pressform in einzelne Fleischportionen vorbestimmter Form und Größe getrennt insbesondere gestanzt. Hierzu wird das Fleischteil unter ein entsprechendes Stanzwerkzeug gebracht. Während des Stanzens kann ein erneutes Verformen stattfinden. Bei diesem Verfahren stehen keine Fleischbereiche über die Mulde hinaus, so dass es nicht zu einem Abschneiden von Reststücken kommt. Auch ist es nicht erforderlich, die Fleischstücke, die zu Beginn in die Pressform eingelegt werden, zu beschneiden.

Das Fleisch der Fleischstücke kann dabei vom Geflügel, Rind, Schwein, Schaf oder Fisch stammen und teilweise auch von Haut bedeckt sein. Die Fleischstücke weisen beim Einlegen in die Form vorzugsweise eine Temperatur von -5°C bis -20°C auf. Auch können die Fleischstücke vor dem Pressen und/oder Beschneiden in Tumblern und/oder durch Einlegen in Soßen oder Marinaden oder Gewürzen oder durch Injizieren vorbehandelt werden.

## Patentansprüche

1. Verfahren zum Herstellen einer Menge einzelner Fleischportionen mit einem gewünschten Gesamtgewicht und mit jeweils vorbestimmter Form und Größe aus einem, zwei oder mehreren gefrorenen, exakt abgewogenen Fleischstücken beliebiger Form von Geflügel, Rind, Schwein, Schaf oder Fisch, deren Gesamtgewicht dem Gesamtgewicht der gewünschten Fleischportionen entspricht , **wobei** die Fleischstücke in eine Mulde einer Pressform mit einem vorstehenden äußeren Rand eingelegt werden und dann ein entsprechend dem äußeren Rand der Mulde geformter Stempel von oben in die Mulde hineingedrückt wird, bis ein die gesamte Mulde ausfüllendes und damit den gesamten Boden der Mulde bedeckendes, zusammenhängendes Fleischteil geformt ist, **dadurch gekennzeichnet, dass**
der Rand der Formmulde den außen liegenden Randabschnitten der Fleischportionen entspricht und das die Mulde bedeckende, zusammenhängende gefrorene Fleischteil durch Stanzen in die Fleischportionen getrennt wird, wobei hierzu der Stempel entfernt wird und in der Pressform oder einer Stanzmulde außerhalb der Pressform aus dem Fleischteil die einzelnen Fleischportionen vorbestimmter Form und Größe gestanzt werden.

2. Verfahren nach Anspruch 1, **dadurch gekennzeichnet, dass** die Pressfläche des Stempels eine von einer Ebene abweichende Form zum Verformen der Oberseite des Fleischteils aufweist.

3. Verfahren nach einem der beiden vorherigen Ansprüche, **dadurch gekennzeichnet, dass** das Fleischteil durch ein Stanzwerkzeug in die Fleischportionen getrennt wird, wobei während des Stanzens die Fleischportionen nochmals verformt werden.

4. Verfahren nach einem der vorherigen Ansprüche, **dadurch gekennzeichnet, dass** der Boden der Mulde eine von einer Ebene abweichende Form aufweist.

5. Verfahren nach einem der vorherigen Ansprüche, **dadurch gekennzeichnet, dass** das oder die Fleischstück(e) teilweise von Haut bedeckt ist/sind.

6. Verfahren nach einem der vorherigen Ansprüche, **dadurch gekennzeichnet, dass** die Fleischstücke beim Einlegen in die Form eine Temperatur von -5°C bis -20°C aufweisen.

7. Verfahren nach einem der vorherigen Ansprüche, **dadurch gekennzeichnet, dass** die Fleischstücke vor dem Pressen und/oder Beschneiden in Tumblern und/oder durch Einlegen in Soßen oder Marinaden oder Gewürzen oder durch Injizieren vorbehandelt werden.

## Claims

1. Method for producing a plurality of individual portions of meat having a desired total weight and each having a predetermined shape and size from one, two or more frozen, precisely weighed pieces of meat of any shape taken from poultry, beef, pork, lamb or fish, the total weight of which corresponds to the total weight of the desired portions of meat **wherein** said pieces of meat are placed into the cavity of a press mould having a projecting external edge and then a die shaped to correspond with the outer edge of the cavity is pressed into the cavity until a coherent piece of meat filling the entire cavity and thus covering the entire base of the cavity is formed, **characterized in that** the edge of the mould cavity corresponds to the external edge sections of the meat portions and the coherent frozen piece of meat covering the cavity is divided into the portions of meat by stamping, wherein the die is removed and the individual portions of meat of predetermined shape and size are stamped from the piece of meat in the press mould or a stamping cavity outside the press mould.

2. Method in accordance with claim 1, **characterized in that** the pressing surface of the die has a form deviating from the plane for deforming the upper side of the piece of meat.

3. Method in accordance with one of the two preceding claims, **characterized in that** the piece of meat is cut into the meat portions by a stamping tool, wherein the portions of meat are again deformed during the stamping process.

4. Method in accordance with one of the preceding claims, **characterized in that** the base of the cavity has a shape deviating from the plane.

5. Method in accordance with one of the preceding claims **characterized in that** the piece(s) of meat is/are partially covered in skin.

6. Method in accordance with one of the preceding claims, **characterized in that** the pieces of meat have a temperature of -5°C to -20°C when placed in the mould.

7. Method in accordance with one of the preceding claims, **characterized in that** the pieces of meat are pretreated before moulding and/or cutting in tumblers and/or by marinading in sauces or marinades or herbs or by injection.

## Revendications

1. Procédé destiné à la fabrication d'une quantité de portions individuelles de viande d'un poids total souhaité et chacune d'une forme et d'une taille prédéterminées provenant d'un, de deux ou de plusieurs morceaux de viande congelés et exactement pesés de n'importe quelle forme de volaille, boeuf, porc, mouton ou poisson dont le poids total correspond au poids total des portions de viande souhaitées, **sachant que** les morceaux de viande sont insérés dans une cavité de moule avec un bord extérieur en saillie, puis un poinçon ayant la forme du bord extérieur de la cavité est pressé par le dessus dans la cavité jusqu'à ce qu'une pièce de viande cohésive remplissant toute la cavité et recouvrant l'ensemble du fond de la cavité soit formée, **caractérisé en ce que** le bord de la cavité du moule correspond aux parties de bord extérieures des portions de viande et que la pièce de viande congelée cohésive et recouvrant la cavité est séparée par découpage dans les portions de viande, le poinçon étant retiré à cet effet et les portions individuelles de viande d'une forme et d'une taille prédéterminées étant découpées de la pièce de viande dans le moule ou dans une cavité à découper à l'extérieur du moule.

2. Procédé selon la revendication 1, **caractérisé en ce que** la surface de pression du poinçon présente une forme différente d'un plan pour le formage de la face supérieure de la pièce de viande.

3. Procédé selon l'une quelconque des deux revendications précédentes, **caractérisé en ce que** la pièce de viande est séparée en portions de viande par un outil de découpage, lesdites portions de viande étant redéformées pendant le découpage.

4. Procédé selon l'une quelconque des revendications précédentes, **caractérisé en ce que** le fond de la cavité présente une forme différente d'un plan.

5. Procédé selon l'une quelconque des revendications précédentes, **caractérisé en ce que** la ou les pièce(s) de viande est (sont) recouverte(s) partiellement de peau.

6. Procédé selon l'une quelconque des revendications précédentes, **caractérisé en ce que** les morceaux de viande présentent une température comprise entre -5 °C et -20 °C quand ils sont insérés dans le moule.

7. Procédé selon l'une quelconque des revendications précédentes, **caractérisé en ce que** les morceaux de viande sont prétraités avant d'être moulés et/ou découpés dans des dispositifs de massage de viande et/ou en les macérant dans des sauces ou marinades ou épices ou par injection.
